# EUROPEAN PATENT SPECIFICATION

(11) **EP 2 393 017 B1**
(45) Date of publication and mention of the grant of the patent: **18.12.2013**
(21) Application number: 10165057.0
(22) Date of filing: 07.06.2010
(51) Int. Cl.: G06F 17/18, G01N 30/86

(54) **A method for quantifying peaks in an analytical signal**
Verfahren zur Quantifizierung von Spitzenwerten in einem analytischen Signal
Procédé de quantification de crêtes dans un signal analytique

(43) Date of publication of application: 07.12.2011
(73) Proprietor: Siemens Aktiengesellschaft, 80333 München (DE)
(72) Inventor: Klawun, Christoph, 76297, Stutensee (DE); Wang, Aosheng, Eden Prairies, 55344 (US)

(56) References cited:
- WERNER VACH ET AL: "Peak detection in mass spectrometry data using repeated measurements. A graphical approach.", , 1 October 2006 (2006-10-01), pages 1-18, XP007918231, Retrieved from the Internet: URL:http://www.stat.sdu.dk/publications/pr eprints/pp010/pp010_text.pdf [retrieved on 2011-04-12]
- YANG CHAO ET AL: "Comparison of public peak detection algorithms for MALDI mass spectrometry data analysis", BMC BIOINFORMATICS, BIOMED CENTRAL, LONDON, GB, vol. 10, no. 1, 6 January 2009 (2009-01-06), page 4, XP021047301, ISSN: 1471-2105, DOI: 10.1186/1471-2105-10-4

## Description

Method executed in a computer for quantifying peaks in an analytical chromatogram a spectrum signal for quantification of analytes corresponding to these peaks.

The present invention relates to a computer-based method for quantifying peaks in an analytical signal by recording successive signal values of the analytical signal and applying a peak analysis algorithm to the signal values within an interval for obtaining a set of peak quantification results. The interval may contain all signal values or just the signal values of an interesting portion of the recorded analytical signal.

Werner Vach et al: "Peak detection in mass spectrometry data using repeated measurements - A graphical approach", October 2006, pages 1-18, retrieved from the Internet: URL: http://www.stat.sdu.dk/publications/preprints/pp010/pp010_tex t.pdf, discloses a peak detection method based on the idea of using different measurements of the same spectrum, where a real peak may be distinguished via a consistency comparison across these measurements instead of prescribing particular thresholds for the intensity level. A peak is only found to be valid if it is consistent within the measurement set.

Most peak analysis algorithms commonly used today for quantification of peaks (peak areas or peak heights) in analytical signals such as chromatograms or spectra are based on derivatives of the signals, which is inherently sensitive to noise and signal shift, especially when signals of low signal-to-noise ratio (S/N) are involved. As real peaks often have poor shapes, such as tailing, fronting, split peaks, and shouldered peaks, a peak analysis algorithm often requires a set of algorithm parameters to be optimized for adapting the algorithm to different peak shapes, which is also often sensitive to noise and shift in a raw signal. Thus, the natural presence of noise and/or signal shift in analytical signals often interfere with quantification of the peaks, causing inaccurate, imprecise, and sometimes erroneous quantification of the analytes corresponding to these peaks.

In a laboratory environment, it may be feasible, albeit expensive or tedious, for an experienced user to manually inspect the results of peak quantification for serious errors caused by such interference. However, the consequence of this interference is often more serious in a continuous and unattended process monitoring environment where erroneously reported results may require expensive manual inspections of the monitored process, may e.g. result inaccurate gas custody transfer billing, or may even cause an erroneous emergency shutdown preparations of an entire process line.

This problem has only been partially solved by filtering out part of noise before peak analysis. Commonly used filtering methods include simple moving average, Savitzky-Golay smoothing, Gaussian filtering, Fourier transform filtering, and wavelet transform filtering.

It is an object of the present invention to facilitate optimizing the peak quantification method including optimizing the parameters of the peak analyses algorithm, thereby reducing the chance of quantification errors when the optimized method is used during subsequent calibration and sample analyses, and to improve runtime robustness in process monitoring.

According to the invention this object is achieved by each one of the methods defined in the claims 1, 2 and 3.

Thus, random noise is added to the analytical signal and/or the signal is shifted within the interval under consideration, before the peak analysis algorithm is applied to the modified signal to quantify the peaks in the signal. The step sequence of noise addition and/or signal shift and peak quantification may be repeated multiple times with different noise and/or different amount and/or direction of shift added or applied to the originally recorded signal each Lime. The noise-addition technique and signal-shift technique can be used either alone or together as needed. A subsequent statistical evaluation of the peak quantification results from the multiple repeated peak analyses of the original and modified signals is used to detect an occurrence of and to reduce the chance of a possible error in the peak quantification that needs to be alarmed or addressed.

The method of the invention can be used during method development to define a more robust set of parameters to be used by a peak analysis algorithm to reduce the chance of errors in quantification of peaks in analytical signals. The same invention can also be used during subsequent calibration and sample analyses with the defined peak analysis parameters to further reduce the chance of errors, to detect such error if it occurs, and thereby to improve the runtime robustness in the quantification of peaks.

In the following the invention will be described by means of different examples Ia, Ib, IIa, IIb and III.
I. Repeated peak analyses of the same analytical signal with noise additions.
   Ia. During method development:
      - Step 1: Acquiring and recording successive values of an analytical signal.
      - Step 2: Applying a peak analysis algorithm to the signal values within an interval to quantify peaks in the signal. The interval may contain all signal values or just the signal values of an interesting portion of the recorded signal.
      - Step 3: Adding random noise to the signal values in the interval. The amount of noise may be similar to the Step 4 signal-to-noise ratio (S/N) of the original signal, which S/N may be estimated in Step 2. Applying the peak analysis algorithm to the noise-modified signal values of Step 3 to quantify peaks in the modified signal.
      - Step 5: Repeating Steps 3 and 4 at least once with different random noise.
      - Step 6: Applying a statistical evaluation algorithm such as Gubbs' test or Dixon's LesL to the sets of peak quantification results obtained in Steps 2 and 4 to detect if there is an outlier in the peak quantification results.
      - (a): Accepting peak quantification results from Step 2 as valid results if there is no outlier.
      - (b): Reporting peak quantification results from Step 2 as invalid if there is at least one outlier. Adjusting parameters of the peak analysis algorithm and restarting at Step 2.
   Ib. During unattended runtime quantification:
      Steps 1 to 5 as in Example Ia.
      Step 6 Applying a statistical evaluation algorithm such as Gubbs' test or Dixon's test to the sets of peak quantification results obtained in Steps 2 and 4 to detect if there is an outlier in the peak quantification results.
         (a) Accepting peak quantification results from Step 2 as valid results if there is no outlier.
         (b) Reporting peak quantification results from Step 2 as valid, but reducing degree of certainty, if there is one outlier.
         (c) Reporting peak quantification results from Step 2 as invalid if there is more than one outlier.
II. Repeated peak analyses of the same analytical signal with time shifts:
   IIa. During method development:
      - Step 1: Acquiring and recording successive values of an analytical signal.
      - Step 2: Applying a peak analysis algorithm to the signal values within an interval to quantify peaks in the signal. The interval may contain all signal values or just the signal values of an interesting portion of the recorded signal.
      - Step 3: Shifting the signal values within the interval by at least one position. Signal values shifted out at one end of the interval are discarded. Positions vacated at the other end are filled with the original values before the shift. Alternatively, and if the interval contains just the signal values of a portion of the recorded signal, neighboring signal values may be shifted from outside in the interval.
      - Step 4: Applying the peak analysis algorithm to the signal values in the interval to quantify peaks in the modified signal.
      - Step 5: Repeating Steps 3 and 4 at least once with different amount and/or direction of shift each time.
      - Step 6: Applying a statistical evaluation algorithm such as Gubbs' test or Dixon's test to the sets of peak quantification results obtained in Steps 2 and 4 to detect if there is an outlier in the peak quantification results.
      - (a): Accepting peak quantification results from Step 2 as valid results if there is no outlier.
      - (b): Reporting peak quantification results from Step 2 as invalid if there is at least one outlier. Adjusting parameters of the peak analysis algorithm and restarting at Step 2.
   IIb. During unattended runtime quantification:
      - Steps 1 to 5: as in Example IIa.
      - Step 6: Applying a statistical evaluation algorithm such as Gubbs' test or Dixon's test to the sets of peak quantification results obtained in Steps 2 and 4 to detect if there is an outlier in the peak quantification results.
      - (a): Accepting peak quantification results from Step 2 as valid results if there is no outlier.
      - (b): Reporting peak quantification results from Step 2 as valid, but reducing degree of certainty, if there is one outlier.
      - (c): Reporting peak quantification results from Step 2 as invalid if there is more than one outlier.
III. Repeated peak analyses of the same analytical signal with noise additions and time shifts.
   - Step 1: Acquiring and recording successive values of an analytical signal.
   - Step 2: Applying a peak analysis algorithm to the signal values within an interval to quantify peaks in the signal.
   - Step 3: Adding random noise to the signal values in the interval.
   - Step 4: Applying the peak analysis algorithm to the signal values in the interval to quantify peaks in the modified signal. Step 4 may be omitted.
   - Step 5: Shifting the signal values within the interval by at least one position.
   - Step 6: Applying the peak analysis algorithm to the signal values in the interval to quantify peaks in the modified signal.
   - Step 7: Repeating Steps 3 and 4 and/or Steps 5 and 6 at least once with different noise or different amount and/or direction of shift each time.
   - Step 8: Applying a statistical evaluation algorithm such as Gubbs' test or Dixon's test to the sets of peak quantification results obtained in Steps 2, 4 and 6 to detect if there is an outlier in the peak quantification results. Continuing as in Step 6 of Examples I or II.

## Claims

1. A method executed in a computer for quantifying peaks in an analytical chromatogram or spectrum signal for quantification of analytes corresponding to these peaks by recording successive signal values of the analytical signal and applying a peak analysis algorithm to the signal values within an interval for obtaining a set of peak quantification results, **characterised in that** said method further comprising the steps of:
- adding random noise to the recorded signal values,
- applying the same peak analysis algorithm to the noise-modified signal values,
- repeating at least once the two preceding steps, the random noise added to the originally recorded signal values being different each time,
- applying a statistical evaluation algorithm to the obtained sets of peak quantification results for checking the peak quantification results for outliers and
- accepting peak quantification results from the recorded analytical signal as valid results if there is no outlier and reporting peak quantification results from the recorded analytical signal either as invalid if there is at least one outlier or as valid, but reducing degree of certainty, if there is one outlier; and as invalid if there is more than one outlier.

2. A method executed in a computer for quantifying peaks in an analytical chromatogram or spectrum signal for quantification of analytes corresponding to these peaks by recording successive signal values of the analytical signal and applying a peak analysis algorithm to the signal values within an interval for obtaining a set of peak quantification results, **characterised in that** said method further comprising the steps of:
- shifting the signal values within said interval by at least one position, wherein signal values shifted out at one end of the interval are discarded and positions vacated at the other end are filled with the original values before the shift or neighboring signal values shifted from outside in the interval,
- applying the same peak analysis algorithm to the signal values in said interval,
- repeating at least once the two preceding steps, the amount and/or direction of shift against the originally recorded signal values being different each time,
- applying a statistical evaluation algorithm to the obtained sets of peak quantification results for checking the peak quantification results for outliers and
- accepting peak quantification results from the recorded analytical signal as valid results if there is no outlier and reporting peak quantification results from the recorded analytical signal either as invalid if there is at least one outlier or as valid, but reducing degree of certainty, if there is one outlier; and as invalid if there is more than one outlier.

3. A method executed in a computer for quantifying peaks in an analytical chromatogram or spectrum signal for quantification of analytes corresponding to these peaks by recording successive signal values of the analytical signal and applying a peak analysis algorithm to the signal values within an interval for obtaining a set of peak quantification results, **characterised in that** said method further comprising the steps of:
- either adding random noise to the signal values within said interval or shifting the signal values within said interval by at least one position, wherein signal values shifted out at one end of the interval are discarded and positions vacated at the other end are filled with the original values before the shift or neighboring signal values shifted from outside in the interval,
- applying the same peak analysis algorithm to the signal values in said interval,
- repeating at least once the two preceding steps in such a way that in the end the steps of adding random noise and shifting the signal values are each performed at least once, where in the case that the steps of adding random noise or shifting the signal values are performed at least twice, the random noise added to the originally recorded signal values or the amount and/or direction of shift against the originally recorded signal values are different each time,
- applying a statistical evaluation algorithm to the obtained sets of peak quantification results for checking the peak quantification results for outliers and
- accepting peak quantification results from the recorded analytical signal as valid results if there is no outlier and reporting peak quantification results from the recorded analytical signal either as invalid if there is at least one outlier or as valid, but reducing degree of certainty, if there is one outlier; and as invalid if there is more than one outlier.

4. The method of one of the preceding claims used during the runtime of automated process analytics.

5. The method of one of the preceding claims, **characterized in that** parameters of the peak analysis algorithm are adjusted in dependence on the number and amount of the outliers.

## Patentansprüche

1. In einem Computer ausgeführtes Verfahren zum Quantifizieren von Spitzen in einem analytischen Chromatogramm- oder Spektrumsignal zur Quantifizierung von diesen Spitzen entsprechenden Analyten durch Aufzeichnen von sukzessiven Signalwerten des analytischen Signals und Anwenden eines Spitzenanalysealgorithmus auf die Signalwerte in einem Intervall zum Erhalten einer Menge von Spitzenquantifizierungsergebnissen, **dadurch gekennzeichnet, dass** das Verfahren ferner die folgenden Schritte umfasst:
- Hinzufügen von Zufallsrauschen zu den aufgezeichneten Signalwerten,
- Anwenden desselben Spitzenanalysealgorithmus auf die rauschmodifizierten Signalwerte,
- mindestens einmaliges Wiederholen der zwei vorhergehenden Schritte, wobei das zu den ursprünglich aufgezeichneten Signalwerten hinzugefügte Zufallsrauschen jedes Mal verschieden ist,
- Anwenden eines statistischen Auswertungsalgorithmus auf die erhaltenen Mengen von Spitzenquantifizierungsergebnissen zur Prüfung der Spitzenquantifizierungsergebnisse auf Ausreißer und
- Annehmen von Spitzenquantifizierungsergebnissen aus dem aufgezeichneten analytischen Signal als gültige Ergebnisse, wenn es keinen Ausreißer gibt, und Melden von Spitzenquantifizierungsergebnissen aus den aufgezeichneten analytischen Signalen entweder als ungültig, wenn es mindestens einen Ausreißer gibt, oder als gültig, aber den Gewissheitsgrad verringernd, wenn es einen Ausreißer gibt; und als ungültig, wenn es mehr als einen Ausreißer gibt.

2. In einem Computer ausgeführtes Verfahren zum Quantifizieren von Spitzen in einem analytischen Chromatogramm- oder Spektrumsignal zur Quantifizierung von diesen Spitzen entsprechenden Analyten durch Aufzeichnen von sukzessiven Signalwerten des analytischen Signals und Anwenden eines Spitzenanalysealgorithmus auf die Signalwerte in einem Intervall zum Erhalten einer Menge von Spitzenquantifizierungsergebnissen, **dadurch gekennzeichnet, dass** das Verfahren ferner die folgenden Schritte umfasst:
- Verschieben der Signalwerte im Intervall um mindestens eine Position, wobei an einem Ende des Intervalls herausgeschobene Signalwerte verworfen und an dem anderen Ende freigemachte Positionen mit den ursprünglichen Werten vor der Verschiebung oder Nachbarsignalwerten, die von außen in dem Intervall verschoben werden, gefüllt werden,
- Anwenden desselben Spitzenanalysealgorithmus auf die Signalwerte in dem Intervall,
- mindestens einmaliges Wiederholen der zwei vorhergehenden Schritte, wobei die Größe und/oder Richtung der Verschiebung gegenüber den ursprünglich aufgezeichneten Signalwerten jedes Mal verschieden sind,
- Anwenden eines statistischen Auswertungsalgorithmus auf die erhaltenen Mengen von Spitzenquantifizierungsergebnissen zur Prüfung der Spitzenquantifizierungsergebnisse auf Ausreißer und
- Annehmen von Spitzenquantifizierungsergebnissen aus dem aufgezeichneten analytischen Signal als gültige Ergebnisse, wenn es keinen Ausreißer gibt, und Melden von Spitzenquantifizierungsergebnissen aus den aufgezeichneten analytischen Signalen entweder als ungültig, wenn es mindestens einen Ausreißer gibt, oder als gültig, aber den Gewissheitsgrad verringernd, wenn es einen Ausreißer gibt; und als ungültig, wenn es mehr als einen Ausreißer gibt.

3. In einem Computer ausgeführtes Verfahren zum Quantifizieren von Spitzen in einem analytischen Chromatogramm- oder Spektrumsignal zur Quantifizierung von diesen Spitzen entsprechenden Analyten durch Aufzeichnen von sukzessiven Signalwerten des analytischen Signals und Anwenden eines Spitzenanalysealgorithmus auf die Signalwerte in einem Intervall zum Erhalten einer Menge von Spitzenquantifizierungsergebnissen, **dadurch gekennzeichnet, dass** das Verfahren ferner die folgenden Schritte umfasst:
- entweder Hinzufügen von Zufallsrauschen zu den Signalwerten in dem Intervall oder Verschieben der Signalwerte in dem Intervall um mindestens eine Position, wobei an einem Ende des Intervalls herausgeschobene Signalwerte verworfen und an dem anderen Ende freigemachte Positionen mit den ursprünglichen Werten vor der Verschiebung oder Nachbarsignalwerten, die von außen in dem Intervall verschoben werden, gefüllt werden,
- Anwenden desselben Spitzenanalysealgorithmus auf die Signalwerte in dem Intervall,
- mindestens einmaliges Wiederholen der zwei vorhergehenden Schritte dergestalt, dass am Ende die Schritte des Hinzufügens von Zufallsrauschen und des Verschiebens der Signalwerte jeweils mindestens einmal ausgeführt werden, wobei, falls die Schritte des Hinzufügens von Zufallsrauschen oder des Verschiebens der Signalwerte mindestens zwei Mal ausgeführt werden, das zu den ursprünglich aufgezeichneten Signalwerten hinzugefügte Zufallsrauschen oder die Größe und/oder Richtung der Verschiebung gegenüber den ursprünglich aufgezeichneten Signalwerten jedes Mal verschieden sind,
- Anwenden eines statistischen Auswertungsalgorithmus auf die erhaltenen Mengen von Spitzenquantifizierungsergebnissen zur Prüfung der Spitzenquantifizierungsergebnisse auf Ausreißer und
- Annehmen von Spitzenquantifizierungsergebnissen aus dem aufgezeichneten analytischen Signal als gültige Ergebnisse, wenn es keinen Ausreißer gibt, und Melden von Spitzenquantifizierungsergebnissen aus dem aufgezeichneten analytischen Signal entweder als ungültig, wenn es mindestens einen Ausreißer gibt, oder als gültig, aber den Gewissheitsgrad verringernd, wenn es einen Ausreißer gibt; und als ungültig, wenn es mehr als einen Ausreißer gibt.

4. Verfahren nach einem der vorhergehenden Ansprüche, das während der Laufzeit automatisierter Prozessanalytik verwendet wird.

5. Verfahren nach einem der vorhergehenden Ansprüche, **dadurch gekennzeichnet, dass** Parameter des Spitzenanalysealgorithmus in Abhängigkeit von der Anzahl und Größe der Ausreißer justiert werden.

## Revendications

1. Procédé exécuté dans un ordinateur pour quantifier des crêtes dans un signal analytique de chromatogramme ou de spectre pour une quantification d'analytes correspondants à ces crêtes, en enregistrant des valeurs successives du signal analytique et en appliquant un algorithme d'analyse de crête aux valeurs du signal dans un intervalle pour obtenir un jeu de résultats de quantification de crête, **caractérisé en ce que** le procédé comprend en outre les stades :
- d'addition de bruit aléatoire aux valeurs du signal enregistré,
- d'application du même algorithme d'analyse de crête aux valeurs du signal modifié par du bruit,
- de répétition au moins une fois des deux stades précédents, le bruit aléatoire ajouté aux valeurs du signal enregistré à l'origine étant différent chaque fois,
- d'application d'un algorithme d'évaluation statistique aux jeux obtenus des résultats de quantification de crête pour vérifier les résultats de quantification de crête pour des points aberrants et
- d'acceptation des résultats de quantification de crête, à partir du signal analytique enregistré, comme résultats valables s'il n'y a pas de points aberrants et de considérer les résultats de quantification de crête provenant du signal analytique enregistré comme non valables s'il y a au moins un point aberrant ou comme valables, mais en réduisant le degré de certitude, s'il y a un point aberrant et comme non valables s'il y a plus d'un point aberrant.

2. Procédé exécuté dans un ordinateur pour quantifier des crêtes dans un signal analytique de chromatogramme ou de spectre pour une quantification d'analytes correspondants à ces crêtes, en enregistrant des valeurs successives du signal analytique et en appliquant un algorithme d'analyse de crête aux valeurs du signal dans un intervalle pour obtenir un jeu de résultats de quantification de crête, **caractérisé en ce que** le procédé comprend en outre les stades :
- de décalage des valeurs du signal dans l'intervalle d'au moins une position, les valeurs du signal décalées à une extrémité de l'intervalle étant écartées et des positions libérées à l'autre extrémité étant remplies par les valeurs d'origine avant le décalage ou par des valeurs du signal voisines décalées de l'extérieur de l'intervalle,
- d'application du même algorithme d'analyse de crête aux valeurs du signal dans l'intervalle,
- de répétition au moins une fois des deux stades précédents, le montant et/ou la direction de décalage par rapport aux valeurs du signal enregistré à l'origine étant différents chaque fois,
- d'application d'un algorithme d'évaluation statistique aux jeux obtenus de résultats de quantification de crête pour vérifier les résultats de quantification de crête pour des points aberrants et
- d'acceptation des résultats de quantification de crête, à partir du signal analytique enregistré, comme résultats valables s'il n'y a pas de points aberrants et de considérer les résultats de quantification de crête provenant du signal analytique enregistré comme non valables s'il y a au moins un point aberrant ou comme valables, mais en réduisant le degré de certitude, s'il y a un point aberrant et comme non valables s'il y a plus d'un point aberrant.

3. Procédé exécuté dans un ordinateur pour quantifier des crêtes dans un signal analytique de chromatogramme ou de spectre pour une quantification d'analytes correspondants à ces crêtes, en enregistrant des valeurs successives du signal analytique et en appliquant un algorithme d'analyse de crête aux valeurs du signal dans un intervalle pour obtenir un jeu de résultats de quantification de crête, **caractérisé en ce que** le procédé comprend en outre les stades :
- d'addition de bruit aléatoire aux valeurs du signal dans l'intervalle ou de décalage des valeurs du signal dans l'intervalle d'au moins une position, des valeurs du signal décalées à une extrémité de l'intervalle étant écartées et des positions libérées à l'autre extrémité étant remplies des valeurs d'origine avant le décalage ou de valeurs du signal voisines décalées de l'extérieur de l'intervalle,
- d'application du même algorithme d'analyse de crête aux valeurs du signal dans l'intervalle,
- de répétition au moins une fois des deux stades précédents, de manière à ce qu'à la fin, les stades d'addition de bruit aléatoire et de décalage des valeurs du signal soient effectués chacun au moins une fois, dans lequel dans le cas où les stades d'addition de bruit aléatoire ou de décalage des valeurs du signal sont effectués au moins deux fois, le bruit aléatoire ajouté aux valeurs du signal enregistré à l'origine ou le montant et/ou la direction du décalage par rapport aux valeurs du signal enregistré à l'origine sont différents chaque fois,
- d'application d'un algorithme d'évaluation statistique aux jeux obtenus de résultats de quantification de crête pour vérifier les résultats de quantification de crête pour des points aberrants et
- d'acceptation des résultats de quantification de crête, à partir du signal analytique enregistré, comme résultats valables s'il n'y a pas de points aberrants et de considérer les résultats de quantification de crête provenant du signal analytique enregistré comme non valables s'il y a au moins un point aberrant ou comme valables, mais en réduisant le degré de certitude, s'il y a un point aberrant et comme non valables s'il y a plus d'un point aberrant.

4. Procédé suivant l'une des revendications précédentes, utilisé pendant le temps d'exécution d'analyse automatisée de processus.

5. Procédé suivant l'une des revendications précédentes, **caractérisé en ce que** l'on règle des paramètres de l'algorithme d'analyse de crête en fonction du nombre et du montant des points aberrants.
